# EUROPEAN PATENT SPECIFICATION

(11) **EP 1 743 755 B1**
(45) Date of publication and mention of the grant of the patent: **28.10.2009**
(21) Application number: 05730508.8
(22) Date of filing: 13.04.2005
(51) Int. Cl.: B29C 33/04, B29C 35/04

(54) **TIRE VULCANIZING METHOD AND TIRE VULCANIZING PROCESS SETTING METHOD**
REIFENVULKANISIERUNGSVERFAHREN UND AUSHÄRTVERFAHREN FÜR DEN REIFENVULKANISIERVORGANG
PROCÉDÉ DE VULCANISATION DES PNEUS ET PROCÉDÉ DE RÉGLAGE DU PROCESSUS DE VULCANISATION DES PNEUS

(30) Priority: 06.05.2004 JP 2004137291
(43) Date of publication of application: 17.01.2007
(73) Proprietor: Bridgestone Corporation, Tokyo 104-8340 (JP)
(72) Inventor: KANEDA, Eiichi, c/o BRIDGESTONE CORPORATION, Kodaira-shi, Tokyo 187-8531 (JP)
(74) Representative: Whalley, Kevin
(86) International application number: PCT/JP2005/007157
(87) International publication number: WO 2005/108038

(56) References cited:
- JP-A- 7 195 370
- JP-A- 2002 172 622
- JP-A- 2002 172 624
- US-B1- 6 478 991

## Description

This invention relates to a method of vulcanizing a tire and a method of setting a vulcanization process of a tire vulcanized by the above vulcanizing method, and more particularly to an optimization of a vulcanization quality every each site of the tire.

In the vulcanization of a tire, heat is generally supplied from both the inner side and outer side of the tire. As a method of supplying heat from the outer side, there are a method wherein a vulcanization mold is statically placed in a thermal fluid to directly heat the vulcanization mold with such a thermal fluid, and a method wherein a heating plate is brought into contact with an outside of a vulcanization mold and a thermal fluid is supplied to a jacket arranged in the heating plate to indirectly heat the vulcanization mold with such a thermal fluid. In the former method, the outside of the tire itself can be heated uniformly, but in the latter method it is required to dispose a jacket at a position corresponding to each site of the tire for efficiently and uniformly heating all sites of the tire.

As an example of the latter method, there is known a method wherein since heat quantities per volume required for obtaining a predetermined vulcanization degree largely differ between a tread portion and a site of a tire side face ranging from a bead portion through a sidewall portion to a shoulder portion, for example in the case of a large-size tire such as a tire for a construction vehicle or the like, thermal fluids having different temperatures are supplied to jackets arranged at positions corresponding to these tire portions to vulcanize the tire (see, for example, Patent Document 1). In the latter method, therefore, there is a merit that the supplying conditions of the thermal fluid can be changed for each jacket.
Patent Document 1: JP-A-2002-172624

In the conventional tire vulcanizing method, however, although the conditions such as a heat quantity per volume required for obtaining the predetermined vulcanization degree and an allowable maximum temperature generally differ between the bead portion and the shoulder portion, thermal fluid of the same system is used as a thermal fluid supplied to each of the jackets arranged at positions corresponding to the bead portion and the shoulder portion because if it is intended to supply thermal fluids having different temperatures to the jackets located at positions corresponding to three tire sites of the tread portion, bead portion and shoulder portion, respectively, the supply systems become considerably complicated. As a result, it is difficult to simultaneously satisfy the above conditions at the shoulder portion and both the tire sites in the conventional vulcanization method. Inversely, when the materials are selected as a primary requirement satisfying the necessary heat quantity and allowable maximum temperature, there is a problem that the performances of the tire itself are compelled to become unsatisfactory.

In view of the above problems, the invention aims to provide a tire vulcanizing method which can satisfy the allowable range of vulcanization degree and allowable maximum temperature previously defined at each tire site in all of plural tire sites at least including the bead portion and shoulder portion when a heating plate is brought into contact with the outside of a vulcanization mold and thermal fluid is supplied to a jacket disposed in the heating plate to vulcanize the tire.

(1) The invention provides a method of vulcanizing a tire wherein use is made of a vulcanization mold closed after the accommodation of an unvulcanized tire, which includes side mold members forming both side faces of the tire and extending radially from a bead portion to a shoulder portion, and a heating plate is brought into contact with an outer face of each side mold member in a widthwise direction of the tire and provided with an inner jacket arranged at a radial position corresponding to the bead portion and an outer jacket arranged at a radial position corresponding to the shoulder portion, and a thermal fluid is supplied to each of the jackets to use heat transmitted from the thermal fluid through the heating plate and the side mold member to the tire as at least one vulcanization heat source, in which:
at least a part of supply conditions including kind, fluid temperature and supply timing of the thermal fluid is made different between the inner jacket and the outer jacket,
wherein as the thermal fluid supplied to the jackets are used two systems of thermal fluids having previously determined different temperatures and the two systems of the thermal fluids are changed over at a predetermined timing during the vulcanization in at least one of the jackets, and
the thermal fluids supplied to the inner jacket and the outer jacket just after the start of the vulcanization are a thermal fluid of a high temperature side among the thermal fluid of the two systems, and a change-over timing of the thermal fluid is set so as to change to a low temperature side of the thermal fluid supplied to a jacket in at least one tire site of the bead portion and the shoulder portion before the temperature in this site exceeds the allowable maximum temperature so as to satisfy conditions of vulcanization degree range previously determined for each of all of tire sites at least including the bead portion and the shoulder portion.
Throughout the specification, the term "jacket" means a combination of a space passing the thermal fluid for heating or cooling and a portion surrounding the space, in which the portion surrounding the space may be integrally united with the periphery of the jacket. For example, a combination of a thermal fluid passing space formed by piercing the heating plate and a portion of the heating plate surrounding the space is called a "jacket".

(2) In a preferred tire vulcanizing method of (1), the thermal fluid selected from the two systems is supplied to a tread jacket disposed in an annular heating member which is brought into contact with radially outer faces of plural tread segments circumferentially divided in the vulcanization mold and forming a tire tread face.

(3) In a preferred tire vulcanizing method of (1) or (2), the number of changing over the supply of the thermal fluid during the vulcanization is one, and the change-over is carried out by changing the thermal fluids of the two system from a high temperature side to a low temperature side.

(4) In a preferred tire vulcanizing method of any one of (1)-(3), temperatures of the thermal fluids of the two systems are higher than 100°C at the high temperature side and 20-100°C at the low temperature side.

(5) In a preferred tire vulcanizing method of (4), the thermal fluid of the high temperature side is steam and the thermal fluid of the low temperature side is water.

(6) In a preferred tire vulcanizing method of any one of (1)-(3), the high temperature side and the low temperature side in the thermal fluids of the two systems are steam.

(7) In a preferred method of setting a tire vulcanization method (1) to (6) of (6) the thermal fluids supplied to the inner jacket, the outer jacket and the tread jacket just after the start of the vulcanization are a thermal fluid of a high temperature side among the thermal fluids of the two systems, and a change-over timing of the thermal fluid is set so as to change to a low temperature side of the thermal fluid supplied to a jacket in at least one tire site of the bead portion, the shoulder portion and the tread portion before the temperature in this site exceeds the allowable maximum temperature.

(8) In a preferred method of setting a tire vulcanization method of (1)-(7), only one kind of the thermal fluids is supplied to at least one of the inner jacket, outer jacket and tread jacket, and the vulcanization is ended at a time when has reached a vulcanization degree of the tire site corresponding to such a jacket a previously determined vulcanization degree.

According to the invention of (1), at least a part of supply conditions including kind, fluid temperature and supply timing of the thermal fluid is made different between the inner jacket and the outer jacket, so that the supply conditions of the thermal fluids to the jackets located at positions corresponding to the tire sites can be independently set to each other so as to satisfy the conditions of allowable vulcanization degree range and allowable maximum temperature previously determined at each tire site with respect at least bead portion and shoulder portion.

According to the invention of (1), as the thermal fluid supplied to the inner and outer jackets are used thermal fluids of two systems having previously determined different temperatures and the thermal fluids of the two systems are changed over at the predetermined timing during the vulcanization in at least one of the jackets, so that the kinds of the thermal fluids or the change-over timing of the thermal fluids of the two systems are made different between these jackets and only supply sources for the thermal fluids of the two systems are provided, whereby the vulcanization conditions of the bead portion and the shoulder portion can be optimized independently and the expected purpose can be attained by a simple supply system for the thermal fluid.

According to the preferred invention of (2), the thermal fluid selected from the two systems is supplied to the tread jacket disposed at the position corresponding to the tread portion, so that the kind, number of the thermal fluid used in the tread jacket or the change-over timing for the thermal fluids of the two systems can be set independently from the other jackets, and hence the vulcanization conditions can be optimized even at the other tire sites such as bead portion and the shoulder portion without complicating the supply system for the thermal fluid.

According to the preferred invention of (3), the number of the change-over to the thermal fluids during the vulcanization is one and such a change-over is carried out by changing the thermal fluids of the two systems from the high temperature side to the low temperature side, so that the heating of the tire is conducted efficiently from the start of the vulcanization and also the vulcanization of the tire can be ended in a short time by changing the thermal fluid to the low temperature side before the tire temperature exceeds the allowable maximum temperature, and the tire temperature never exceeds the allowable maximum temperature.

According to the preferred invention of (4), the thermal fluids of the two systems are higher than 100°C at the high temperature side and 20-100°C at the low temperature side, so that the respective tire sites can be vulcanized more rapidly and cooled more rapidly, and hence the vulcanization time can be further shortened.

According to the preferred invention of (5), the thermal fluid of the high temperature side is steam, so that the required temperature can be generated at a lower pressure as compared with the case of using warm water and the steam generating installation such as piping system, boiler and the like can be simplified. Also, the thermal fluid of the low temperature side is water, so that higher cooling capacity can be provided and the given site of the tire can be cooled in a short time to suppress the rise of the temperature.

According to the preferred invention of (6), the thermal fluids of the two systems are steam at both high temperature side and low temperature side, so that the temperatures of these steams are set properly and the change-over timing of these thermal fluids are made different in accordance with the tire site, whereby the proceeding degree of different vulcanization in the tire sites can be finely adjusted.

According to the invention of (1), the thermal fluids supplied to the inner jacket and the outer jacket just after the start of the vulcanization are a thermal fluid of a high temperature side among the thermal fluid of the two systems, so that the tire can be efficiently heated from the start of the vulcanization. Also, the change-over timing of the thermal fluid is set so as to change to a low temperature side of the thermal fluid supplied to a jacket in at least one tire site of the bead portion and the shoulder portion before the temperature in this site exceeds the allowable maximum temperature, so that the vulcanization of the tire can be ended in a short time and the temperature of the tire never exceeds the allowable maximum temperature.

According to the preferred invention of (7), the thermal fluids supplied to the inner jacket, the outer jacket and the tread jacket just after the start of the vulcanization are a thermal fluid of a high temperature side among the thermal fluids of the two systems, so that the tire can be efficiently heated even in the tread portion from the start of the vulcanization. Also, the change-over timing of the thermal fluid is set so as to change to a low temperature side of the thermal fluid supplied to a jacket in at least one tire site of the bead portion, the shoulder portion and the tread portion before the temperature in this site exceeds the allowable maximum temperature, so that the vulcanization of the tire can be ended in a short time even in the tread portion and the temperature of the tire never exceeds the allowable maximum temperature.

According to the preferred invention of (8), only one kind of the thermal fluids is supplied to at least one of the inner jacket, outer jacket and tread jacket, and the vulcanization is ended at a time when a vulcanization degree of the tire site corresponding to such a jacket has reached a previously determined vulcanization degree, so that the vulcanization time can be made shortest by ending the vulcanization in accordance with the tire site having a longest time of reaching the predetermined vulcanization degree.

The invention will be further described with reference to one companying drawings, wherein
FIG. 1 is a section view of a vulcanization apparatus used in the tire vulcanizing method according to the invention showing a state of vulcanizing the tire.
FIG. 2 is a section view of the vulcanization apparatus showing a state of raising an upper platen.
FIG. 3 is a section view of the vulcanization apparatus showing a state of moving a tread segment outward in a radial direction.
FIG. 4 is a schematic diagram of piping in a supply system for thermal fluid.
FIG. 5 is a schematic diagram of another piping in a supply system for thermal fluid.
FIG. 6 is a chart showing an example of setting vulcanization process on a supply timing of thermal fluid.

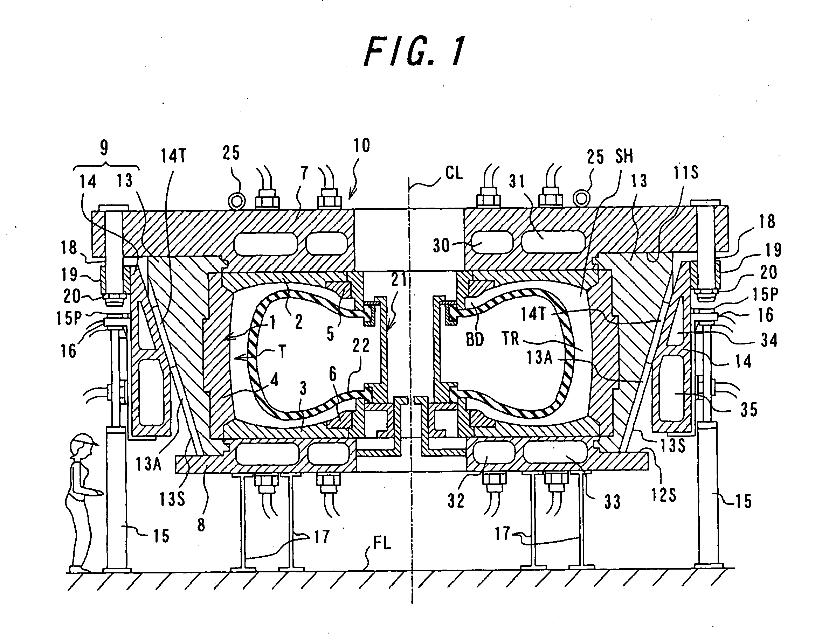

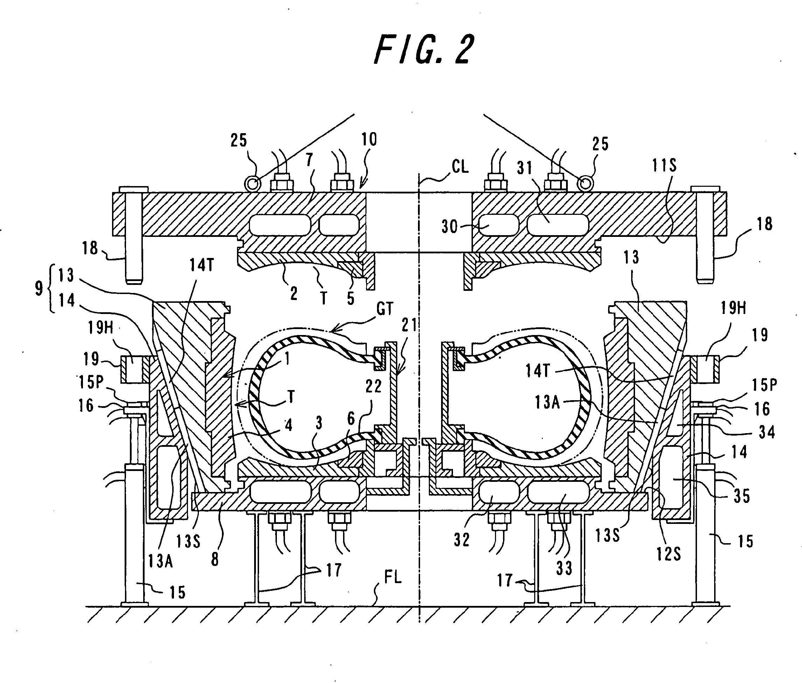

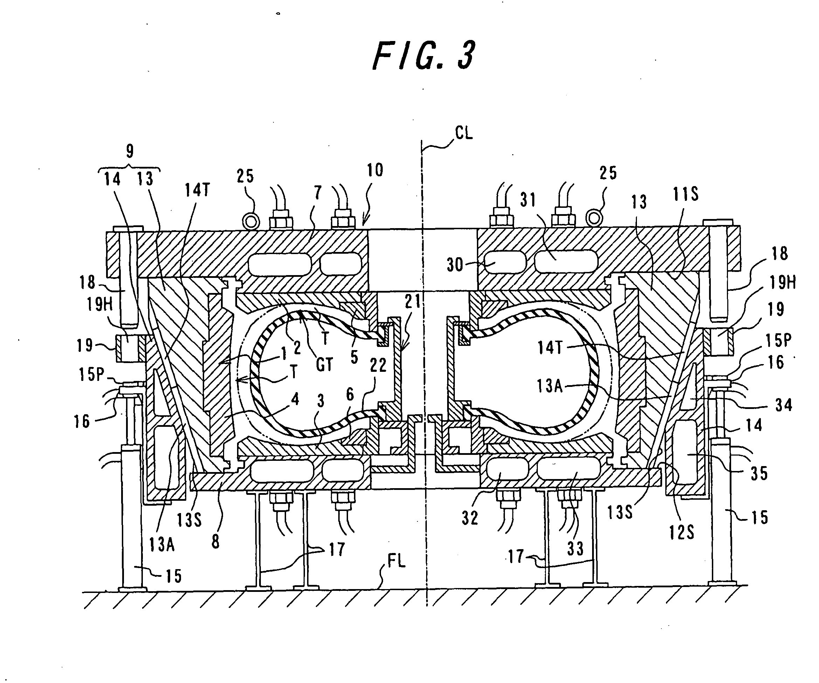

An embodiment of the invention will be described with reference to the drawings. FIG. 1 is a section view of a tire vulcanization apparatus used in the tire vulcanizing method according to the invention as an apparatus for a construction vehicle tire in the vulcanization of the tire, and FIG. 2 is a section view of such an apparatus at a state of raising an upper platen for the fixation of an upper side mold member, and FIG. 3 is a section view of the apparatus showing a state of moving a tread segment outward in a radial direction.

A vulcanization mold 1 comprises a pair of side mold members 2, 3 and a plurality of tread segments 4 engaging with outer peripheral portions of these side mold members 2, 3. The tread segments 4 have a fan-like form, respectively, viewing in a plane and are united with each other into an annular form in the operation of the vulcanization mold 1 and engaged with the outer peripheral portions of the side mold members 2, 3 to form a treading face in a tread portion TR of a tire T. In this meaning, the tread segment 4 has a form circumferentially divided into plural parts, for example 6-9 parts. On the other hand, the side mold members 2, 3 form the remaining sites of the tire, i.e. a pair of tire side faces radially extending from shoulder portions SH connected to both sides of the tread portion TR through sidewall portions to bead portions BD. The side mold members 2, 3 are provided with bead ring members 5, 6 for shaping the bead portion through vulcanization.

In the vulcanization apparatus 10 for large-size tire (hereinafter referred to as a vulcanization apparatus simply) is transversely mounted the vulcanization mold 1 as illustrated. The vulcanization apparatus 10 comprises a pair of upper and lower platens 7, 8. The upper side mold member 2 is fixed to the upper platen 7, and the lower side mold member 3 is fixed to the lower platen 8, and each of the platens 7, 8 constitutes a heating plate brought into contact with each of the side mold members 2, 3 to heat them.

In the upper platen 7 are formed an annular inner jacket 30 located at a radial position corresponding to the bead portion BD of the tire accommodated in the vulcanization mold 1 and an annular outer jacket 31 located at a radial position corresponding to the shoulder portion SH. Similarly, in the lower platen 8 are formed an annular inner jacket 32 corresponding to the bead portion BD and an annular outer jacket 33 corresponding to the shoulder portion SH. To each of these jackets 30-33 is supplied a thermal fluid as a heat source for heating the tire from the side face of the tire or a thermal fluid for cooling the tire from the side face of the tire.

Also, the vulcanization apparatus comprises a plurality of sectors 13 fixedly attached to each of the tread segments 4. Each of the sectors 13 is movable inside and outside in the radial direction with respect to a center axial line CL together with the corresponding tread segments 4 between the pair of platens 7, 8 during the operation of the vulcanization apparatus 10. In order to smoothly conduct such a movement, each of the platens 7, 8 is provided on its radially outer opposed faces with faces 11S, 12S of sliding each of the sectors 13 inward and outward in the radial direction, while each of the sectors 13 is provided with a tapered outer peripheral face 13S tapering downward.

The vulcanization apparatus 10 comprises an accommodating ring 14 heating each of the tread segments 4 through each sector 13. The accommodating ring 14 is provided with a tapered inner peripheral face 14S slidably engaging with the tapered outer peripheral face 13S of the sector 13. The inner peripheral face 14S has the same tapered form as in the outer peripheral face 13S. The accommodating ring 14 latches the outer peripheral face 13S of each of the sectors 13. As the latching means, for example, a T-shaped projection 14T fitting into a dovetail groove 13A formed in the outer peripheral face 13S of the sector 13 is formed in the inner peripheral face 14S. The accommodating ring 14 and the respective sector 13 engaged therewith are brought into contact with the corresponding tread segments 4 to constitute an annular heating member 9 heating these segments.

In the accommodating ring 14 constituting the annular heating member 9 are formed annular tread jackets 34, 35. To these tread jackets 34, 35 is supplied a thermal fluid as a heat source vulcanizing the tread portion TR or a thermal fluid cooling the tread portion TR.

Further, the vulcanization apparatus 10 comprises a plurality of lifting means is, two lifting means in the illustrated embodiment, lifting up and down the accommodating ring 14. The lifting means 15 includes a pressurized fluid (pressurized gas, pressurized liquid) actuator, an electromagnetic actuator, a mechanical (for example, ball thread type) actuator and the like, and the system thereof is not particularly limited provided the accommodating ring can be lifted up and down. The lifting means 15 is connected and fixed at a top portion 15P of its working axis to the accommodating ring 14 through a fixing member 16.

The lower platen 8 is fixed to a floor face FL through a support member 17, while the upper platen 7 is liftably constituted with respect to the lower platen 8 at a state of fixing to the upper side mold member 2. In order to conduct the lifting operation and the mutual centering of the platens, either the upper platen 7 or the lower platen 8 has a guiding means and a fixing means to the other.

In the illustrated embodiment of the guiding means, the upper platen 7 has a pin 18 fixed thereto, while the accommodating ring 14 has a guide member 19 protruding outward in the radial direction and a hole 19H guiding the pin 18 is formed therein, so that the pin 18 moves upward and downward along a wall face of the guiding hole 19H. In the illustrated embodiment of the fixing means, a clamping member, for example a nut 20 is screwed to threads formed in the top portion of the pin 18, whereby the pin is joined to the guiding member 19 through the nut 20. By these guiding and fixing means it is made possible to separate off the upper platen 7 fixed with the upper side mold member 2 from the vulcanization apparatus 10 and simply mount on the vulcanization apparatus 10. In addition to this, although the illustration is omitted, there may be a case that the pin 18 is fixed to the member 19 and a guide hole for the pin 18 is formed in the upper platen 7 to fix the upper end portion of the pin 18 to the upper platen 7.

Moreover, the vulcanization apparatus 10 comprises means 21 for supplying a pressurized fluid of a predetermined gauge pressure, for example a pressurized gas (pressurized air, pressurized nitrogen gas or the like), to an interior of an unvulcanized tire GT to be vulcanized. The supply means 21 for the pressurized fluid is attached to a central space portion of the lower platen 8. The supply means 21 for the pressurized fluid supplies the pressurized fluid to an interior of a bladder 22 and also may be used as a means for directly supplying the pressurized fluid to an interior of the unvulcanized tire.

The operation of the aforementioned vulcanization apparatus 10 will be described below. At first, the working shaft and top portion 15P of each of the lifting means 15 are lowered to lower the accommodating ring 14, whereby each of the sectors 13 and each of the tread segments 4 are moved outward in the radial direction and the unvulcanized tire GT after the completion of the shaping is placed at an opening state of the tread segments 4.

Next, the upper platen 7 provided with the upper side mold member 2, which is taken out from the vulcanization apparatus 10 and stored at a separate place, is located just above the lower platen 8. For the lifting and transfer of the upper platen 7 is used another lifting-moving means suitable for the transfer of a heavy mass such as an overhead traveling crane or the like when the vulcanization apparatus 10 is super-size, or a lifting means such as an electronic hoist or the like when it is another size.

Then, as shown in FIG. 3, the upper platen 7 is and at the same time the each lifting means 15 is worked to raise the top portion 15P of the working shaft and the fixing member 16, and each of the pins 18 in the upper platen 7 is fitted into the guide groove 19H of the guide member 19 while lowering the upper platen 7. The upper platen 7 is fixed to the accommodating ring 14, while each sector 13 and each tread segment 4 at the opening state are moved inward in the radial direction, whereby the tread segments 4 are annularly united with each other to form a closed state. In this case, in order to prevent the biting of the bladder 22 by the supply means 21 for the pressurized fluid, a low internal pressure of a predetermined gauge pressure is filled in the bladder 22 to accommodate the bladder 22 into the interior of the unvulcanized tire GT through shaping work. This state is shown in FIG. 2.

In FIG. 1, the nut 20 is clamped to the guide member 19. Thereafter, an internal pressure of a predetermined gauge pressure is filled in the interior of the unvulcanized tire GT through the supply means 21 for the pressurized fluid, whereby the unvulcanized tire GT is pushed onto the inner face of the vulcanization mold 1. At the same time as the start of the pushing, preferably before the start of the pushing, the supply of the thermal fluid is started to jackets 30-35 of the pair of the platens 7, 8 and the accommodating ring 14, whereby the vulcanization mold 1 is heated to conduct the vulcanization of the unvulcanized tire GT to thereby obtain a product tire T. After the completion of the vulcanization, the aforementioned process is reversed to take out the product tire T from the vulcanization apparatus 10.

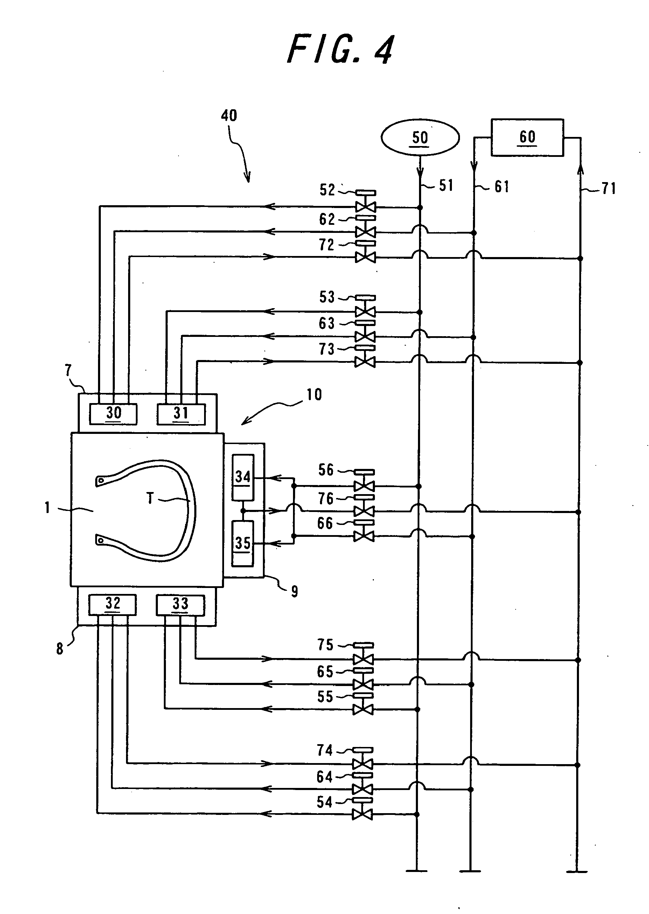

FIG. 4 is a schematic diagram of piping in a supply system 40 for thermal fluid in which thermal fluids are supplied to inner jackets 30, 32, outer jackets 31, 33 and tread jackets 34, 35. The supply system 40 for the thermal fluid is constituted so as to supply the thermal fluids of two system having different temperatures from each other. It is preferable that steam of higher than 100°C is supplied as a thermal fluid of a high temperature side and water of 20-100°C is supplied as a thermal fluid of a low temperature side.

FIG. 4 shows the above preferable example, in which a thermal fluid source of the high temperature side comprises a steam generating device 50 generating steam of a predetermined temperature and a main steam pipe 51 distributing the steam from the steam generating device 50 to one or more vulcanization apparatuses 10, and a thermal fluid source of the low temperature side comprises a low-temperature water generating device 60, a low-temperature water supply pipe 61 distributing the low-temperature water from the low-temperature water generating device 60 to one or more vulcanization apparatuses 10 and a low-temperature water return pipe 71 recovering the low-temperature water circulating in these vulcanization apparatuses 10.

The steam generating device 50 may be constituted with, for example, a boiler and a reducing valve reducing a pressure so as to render the steam generated in the boiler to a predetermined temperature. The low-temperature water generating device 60 may be constituted with, for example, a tank storing water for factory, a temperature adjusting device adjusting the water for factory to a predetermined temperature and a pump sucking the temperature adjusted water from the tank and pumping to the low-temperature water supply pipe 61.

The steam is diverged from the main steam pipe 51 and supplied through an automatic switching valve 52 to the inner jacket 30 of the upper platen 7 and similarly supplied to the other jackets 31-35 through respective automatic switching valves 53-56. Moreover, the steams cooled in the jackets 30-35 are rendered into drains and discharged through steam traps (not shown) to a drain pipe, which can be recovered into the steam generating device 50 or the like.

On the other hand, the low-temperature water is diverted from the low-temperature supply pipe 61 and supplied to the respective jackets 30-35 through automatic switching valves 62-66. Also, the low-temperature waters circularly discharged from the jackets 30-35 are recovered into the low-temperature return pipe 71 through the corresponding automatic switching valves 72-76.

The automatic switching valves 52-56, 62-66 and 72-76 can be worked independently. They are opened and closed based on control signals from a vulcanization control device arranged in the vulcanization apparatus 10 (not shown). For example, they are worked, for example, by switching on or off an operation air supplied to a piston moving a valve body up and down.

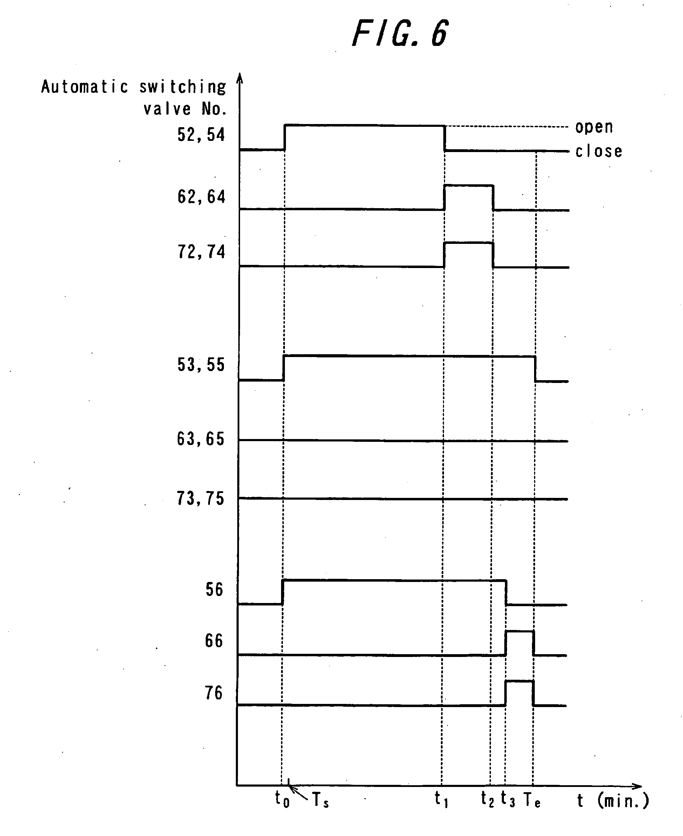

The system for the thermal fluid of the low temperature side may be omitted in the jackets 30-33 other than one or more thereof, if necessary. Also, the thermal fluid may be co-used in the inner jacket 30 of the upper platen 7 and the inner jacket 32 of the lower platen 8, while the thermal fluid may be co-used in the outer jacket 31 of the upper platen 7 and the outer jacket 33 of the lower platen 8. FIG. 6 is a schematic diagram of piping in a supply system 41 for thermal fluid of the latter case.

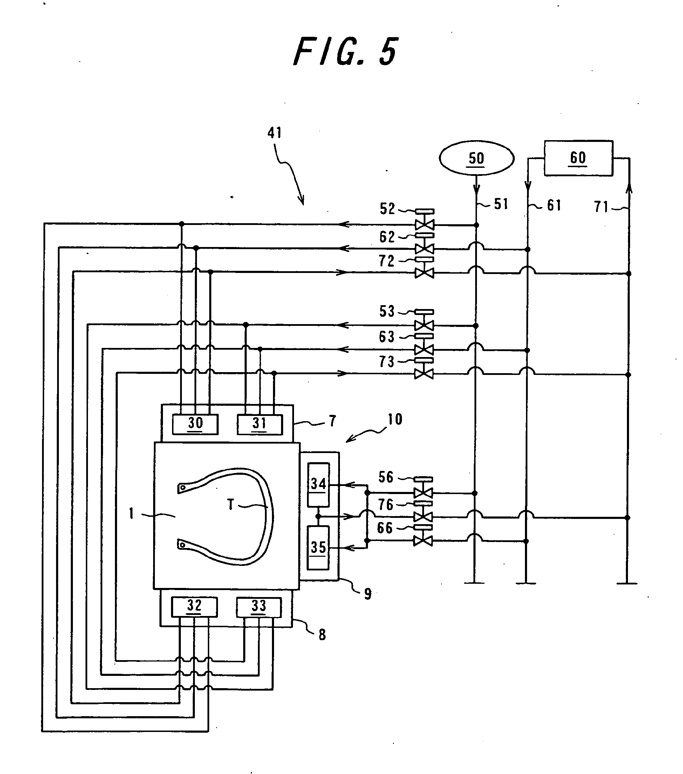

In FIGS. 4 and 5 is shown only one vulcanization apparatus 10, but a plurality of tires can be manufactured with one simple supply system for thermal fluid by using a plurality of vulcanization apparatuses 10 connected to such a supply system for thermal fluid. In this case, the steam and water are supplied to the jackets of the respective vulcanization apparatuses 10 by diverting from the main steam pipe 51 and low-temperature supply pipe 61, respectively. Also, the low-temperature water is recovered from the jackets of the respective vulcanization apparatuses 10 to the low-temperature water return pipe 71.

FIG. 6 is a chart showing an example of setting vulcanization process on a supply timing of thermal fluid supplied to each of the jackets when the thermal fluid is supplied from the supply system 40 for thermal fluid to the vulcanization apparatus 10 to vulcanize the tire, in which an ordinate shows an automatic switching valve represented by reference numerals in FIG. 5 and an abscissa shows a time. In the abscissa, Tₛ is a timing for the start of the vulcanization and Tₑ is a timing for the end of the vulcanization. Also, in the tire to be targeted in the vulcanization process, the vulcanization of the bead portion BD proceeds most rapidly to reach the allowable maximum temperature, and then the vulcanization of the tread portion becomes fast and the proceeding of the vulcanization of the shoulder portion becomes slowest.

In the above setting example, the automatic switching valves 52-56 are first opened at a timing of to minute just before the vulcanization start Tₛ and steam as a thermal fluid of the high temperature side is supplied to all of the jackets 30-35. Then, the automatic switching valves 52, 54 are closed at a timing t₁ that the bead portion BD most rapidly proceeding the vulcanization reaches the predetermined range of the vulcanization degree and just before the predetermined allowable maximum temperature, and at the same time the automatic switching valves 62, 64, 72, 74 are opened to change the thermal fluid in the inner jackets 30, 32 located at positions corresponding to the bead portion BD from the steam to the low-temperature water, whereby the circulation of the low-temperature water is started. By the vulcanization process that this change-over is carried out at a timing of matching with the vulcanization conditions of the bead portion BD, the vulcanization degree of the bead portion BD is rendered into the predetermined range irrespective of the vulcanization conditions of the other tire sites, whereby over vulcanization can be prevented and the temperature rise can be suppressed to prevent the deterioration of rubber.

In the timing t₁, the vulcanization degree in the tire sites other than the bead portion BD does not yet reach the predetermined range, so that the supply of the steam is continued in the jackets located at positions corresponding to these tire sites. At a timing t₂, the automatic switching valves 62, 64, 72, 74 are closed to end the circulation of the low-temperature water. At this time, the bead portion BD is sufficiently cooled because the vulcanization degree and temperature are within the expected ranges at the end of the vulcanization even considering the thermal conduction from the other tire sites.

Then, the automatic switching valve 56 is closed at a timing t₃ that the tread portion TR satisfies the predetermined range of the vulcanization degree before reaching the predetermined allowable maximum temperature, and at the same time the automatic switching valves 66, 76 are opened to change the thermal fluid in the jackets 34, 35 located at positions corresponding to the tread portion TR from the steam to the low-temperature water, whereby the circulation of the low-temperature water is started. This circulation is continued up to the vulcanization end point Tₑ.

On the other hand, the automatic switching valves 53, 55 are closed to stop the supply of the steam to the outer jackets 31, 33 located at positions corresponding to the shoulder portion SH when the vulcanization degree of the shoulder portion SH reaches at the predetermined range. In this timing, the other tire sites already satisfy the required range of the vulcanization degree, so that the vulcanization is ended at this point Tₑ. Thereafter, the mold can be opened to take out the tire therefrom. In this example, the automatic switching valves 63, 65, 73, 75 are closed from the start of the vulcanization to the end thereof.

As mentioned above, according to the tire vulcanizing method of the invention, the optimum vulcanization conditions can be selected at each tire site without influencing the vulcanization conditions at the other tire sites. Also, such conditions are not realized by supplying thermal fluids having various temperatures to jackets corresponding to the tire sites but are realized by changing over the thermal fluids of the previously provided two systems at timing suitable for the vulcanization conditions, so that the installation can be simplified.

The above tire vulcanizing method and method of setting tire vulcanization process can be applied to the vulcanization of various kinds of tires.

## Claims

1. A method of vulcanizing a tire wherein use is made of a vulcanization mold (1) closed after the accommodation of an unvulcanized tire (GT), which includes side mold members (2, 3) forming both side faces of the tire and extending radially from a bead portion (BD) to a shoulder portion (SH), and a heating plate (7, 8) is brought into contact with an outer face of each side mold member (2, 3) in a widthwise direction of the tire and provided with an inner jacket (30, 32) arranged at a radial position corresponding to the bead portion (BD) and an outer jacket (31, 33) arranged at a radial position corresponding to the shoulder portion (SH), and a thermal fluid is supplied to each of the jackets (30, 32; 31, 33) to use heat transmitted from the thermal fluid through the heating plate (7, 8) and the side mold member (2, 3) to the tire as at least one vulcanization heat source, in which:
at least a part of supply conditions including kind, fluid temperature and supply timing of the thermal fluid is made different between the inner jacket (30, 32) and the outer jacket (31, 33),
wherein as the thermal fluid supplied to the jackets (30, 32; 31, 33) are used two systems (50, 51, 52, 53, 56; 60, 61, 62, 63, 66) of thermal fluids having previously determined different temperatures and the two systems of the thermal fluids are changed over at a predetermined timing during the vulcanization in at least one of the jackets, and
the thermal fluids supplied to the inner jacket (30, 32) and the outer jacket (31, 33) just after the start of the vulcanization are a thermal fluid of a high temperature side among the thermal fluid of the two systems (50, 51, 52, 53, 56; 60, 61, 62, 63, 66), and a change-over timing of the thermal fluid is set so as to change to a low temperature side of the thermal fluid supplied to a jacket in at least one tire site of the bead portion (BD) and the shoulder portion (SH) before the temperature in this site exceeds the allowable maximum temperature so as to satisfy conditions of a vulcanization degree range previously determined for each of all of tire sites at least including the bead portion (BD) and the shoulder portion (SH).

2. A method of vulcanizing a tire as claimed in claim 1, wherein the thermal fluid selected from the two systems is supplied to a tread jacket (34, 35) disposed in an annular heating member (9, 14) which is brought into contact with radially outer faces of plural tread segments (4) circumferentially divided in the vulcanization mold (1) and forming a tire tread face.

3. A method of vulcanizing a tire as claimed in claim 1 or 2, wherein the number of changing over the supply of the thermal fluid during the vulcanization is one, and the change-over is carried out by changing the thermal fluids of the two systems (50, 51, 52, 53, 56; 60, 61, 62, 63, 66) from a high temperature side to a low temperature side.

4. A method of vulcanizing a tire as claimed in any of claims 1 to 3, wherein temperatures of the thermal fluids of the two systems (50, 51, 52, 53, 56; 60, 61, 62, 63, 66) are higher than 100 °C at the high temperature side and 20-100 °C at the low temperature side.

5. A method of vulcanizing a tire as claimed in claim 4, wherein the thermal fluid of the high temperature side is steam and the thermal fluid of the low temperature side is water.

6. A method of vulcanizing a tire as claimed in any of claims 1 to 3, wherein the high temperature side and the low temperature side in the thermal fluids of the two systems are steam.

7. A method of setting a tire vulcanization method as claimed in any of claims 1 to 6, wherein the thermal fluids supplied to the inner jacket (30, 32), the outer jacket (31, 33) and the tread jacket (34, 35) just after the start of the vulcanization are a thermal fluid of a high temperature side among the thermal fluid of the two systems (50, 51, 52, 53, 56; 60, 61, 62, 63, 66), and a change-over timing of the thermal fluid is set so as to change to a low temperature side of the thermal fluid supplied to a jacket in at least one tire site of the bead portion (BD), the shoulder portion (SH) and the tread portion (TR) before the temperature in this site exceeds the allowable maximum temperature.

8. A method of setting a tire vulcanization method as claimed in any of claims 1 to 7, wherein only one kind of the thermal fluid is supplied to at least one of the inner jacket (30, 32), outer jacket (31, 33) and tread jacket (34, 35), and the vulcanization is ended at a time when a vulcanization degree of the tire site corresponding to such a jacket has reached a previously determined vulcanization degree.

## Patentansprüche

1. Methode für das Vulkanisieren eines Reifens, wobei Gebrauch gemacht wird von einer Vulkanisationsform (1), die nach dem Einbringen eines unvulkanisierten Reifens (GT) geschlossen wird, welche Seitenformteile (2, 3) umfasst, die beide Seitenflächen des Reifens bilden und sich radial von einem Wulstabschnitt (BD) bis zu einem Schulterabschnitt (SH) erstrecken, und eine Heizplatte (7, 8) mit einer Außenfläche jedes Seitenformteils (2, 3) in Breitenrichtung des Reifens in Kontakt gebracht wird und mit einer Innenverkleidung (30, 32), die in radialer Position angeordnet ist, die dem Wulstabschnitt (BD) entspricht, und eine Außenverkleidung (31,33) ausgestattet ist, die an einer radialen Position angeordnet ist, die dem Schulterabschnitt (SH) entspricht, und ein thermisches Fluid jeder der Verkleidungen (30, 32; 31, 33) zugeführt wird, um die aus dem thermischen Fluid übertragenen Wärme durch die Heizplatte (7, 8) und das Seitenformteil (2, 3) zum Reifen als mindestens eine Vulkanisationswärmequelle zu benutzen, wobei:
mindestens ein Teil der Zuführbedingungen, einschließlich der Art, Fluidtemperatur und des Zuführzeitpunkt des thermischen Fluids zwischen der Innenverkleidung (30, 32) und der Außenverkleidung (31, 33) unterschiedlich gemacht wird,
wobei als thermisches, den Verkleidungen (30, 32; 31,33) zugeführtes Fluid zwei Systeme (50, 51, 52, 53, 56; 60, 61, 62, 63, 66) thermischer Fluide verwendet werden, die vorher bestimmte unterschiedliche Temperaturen aufweisen und die beiden Systeme der thermischen Fluide an einem vorbestimmten Zeitpunkt während des Vulkanisierens in mindestens einer der Verkleidungen ausgetauscht werden, und
die thermischen Fluide, die direkt nach Beginn der Vulkanisation der Innenverkleidung (30, 32) und der Außenverkleidung (31, 33) zugeführt werden, ein thermisches Fluid der Seite hoher Temperatur unter den thermischen Fluiden der beiden Systeme (50, 51, 52, 53 56; 60, 61, 62, 63, 66) sind und ein Austauschzeitpunkt des thermischen Fluids so eingestellt ist, dass zu einer Seite niedriger Temperatur des thermischen Fluids übergewechselt wird, das einer Verkleidung an mindestens einer Reifenstelle des Wulstabschnitts (BD) und des Schulterabschnitts (SH) zugeführt wird, bevor die Temperatur an dieser Stelle die erlaubte Maximaltemperatur übersteigt, um den Bedingungen eines vorher bestimmten Vulkanisationsgradbereichs für alle Reifenstellen, einschließlich des Wulstabschnitts (BD) und des Schulterabschnitts (SH), zu entsprechen.

2. Methode für das Vulkanisieren eines Reifens nach Anspruch 1, wobei das thermische, aus den beiden System ausgewählte Fluid einer Profilverkleidung (34, 35) zugeführt wird, die sich an einem ringförmigen Heizteil (9, 14) befindet, das mit radialen Außenflächen mehrerer Profilsegmente (4) in Kontakt gebracht wird, die zirkumferentiell in der Vulkanisationsform (1) verteilt sind und eine Reifenprofilfläche bilden.

3. Methode für das Vulkanisieren eines Reifens nach Anspruch 1 oder 2, wobei die Anzahl des Austauschens der Zuführung des thermischen Fluids während der Vulkanisation eins beträgt und der Austausch durch Überwechseln der thermischen Fluide der beiden Systeme (50, 51, 52, 53, 56; 60, 61, 62, 63, 66) von einer Seite hoher Temperatur zu einer Seite niedriger Temperatur durchgeführt wird.

4. Methode für das Vulkanisieren eines Reifens nach einem der Ansprüche 1 bis 3, wobei die Temperaturen der thermischen Fluide der beiden Systeme (50, 51, 52, 53, 56; 60, 61, 62, 63, 66) auf der Seite hoher Temperatur höher als 100 °C sind und an der Seite niederer Temperatur zwischen 20 und 100°C betragen.

5. Methode für das Vulkanisieren eines Reifens nach Anspruch 4, wobei das thermische Fluid der Seite hoher Temperatur Dampf ist und das thermische Fluid der Seite niedriger Temperatur Wasser ist.

6. Methode für das Vulkanisieren eines Reifens nach einem der Ansprüche 1 bis 3, wobei die Seite hoher Temperatur und die Seite niedriger Temperatur in den thermischen Fluiden der beiden System Dampf sind.

7. Methode zum Festsetzen einer Reifenvulkanisationsmethode nach einem der Ansprüche 1 bis 6, wobei die thermischen Fluide, die der Innenverkleidung (30, 32), der Außenverkleidung (31, 33) und der Profilverkleidung (34, 35) direkt nach Beginn der Vulkanisation zugeführt werden, ein thermisches Fluid einer Seite hoher Temperatur unter den thermischen Fuiden der beiden Systeme (50, 51, 52, 53, 56; 60, 61, 62, 63, 66) sind und ein Austauschzeitpunkt des thermischen Fluids so eingestellt ist, dass zu einer Seite niedriger Temperatur des thermischen Fluids übergewechselt wird, das einer Verkleidung an mindestens einer Reifenstelle des Wulstabschnitts (BD), des Schulterabschnitts (SH) und des Profilabschnitts (TR) zugeführt wird, bevor die Temperatur an dieser Stelle die erlaubte Maximaltemperatur übersteigt.

8. Methode zum Festsetzen einer Reifenvulkanisationsmethode nach einem der Ansprüche 1 bis 7, wobei nur eine Art des thermischen Fluids mindestens einer von der Innenverkleidung (30, 32), Außenverkleidung (31, 33) und Profilverkleidung (34,35 zugeführt wird und die Vulkanisation zu einem Zeitpunkt abgeschlossen ist, wenn ein Vulkanisationsgrad der Reifenstelle, die einer derartigen Verkleidung entspricht, einen vorher bestimmten Vulkanisationsgrad erreicht hat.

## Revendications

1. Procédé pour la vulcanisation d'un pneu, dans lequel l'utilisation est faite d'un moule de vulcanisation (1) fermé après le placement d'un pneu non vulcanisé (GT), qui inclut des éléments latéraux de moule (2, 3) formant les deux faces latérales du pneu et s'étendant radialement d'une portion de bourrelet (BD) à une portion d'épaule (SH), et une plaque chauffante (7, 8) est amenée en contact avec la face externe de chaque élément latéral de moule (2, 3) dans la direction transversale du pneu et munie d'une chemise interne (30, 32) arrangée à une position radiale correspondant à la portion de bourrelet (BD) et d'une chemise externe (31, 33) arrangée à une position radiale correspondant à la portion d'épaule (SH), et un fluide thermique est approvisionné vers chacune des chemises (30, 32; 31, 33) pour utiliser la chaleur transmise depuis le fluide thermique à travers la plaque chauffante (7, 8) et l'élément latéral de moule (2, 3) vers le pneu en tant que au moins une source de chaleur de vulcanisation, dans lequel:
au moins une partie des conditions d'approvisionnement incluant le type, la température de fluide et le chronométrage d'approvisionnement du fluide thermique est rendue différente entre la chemise interne (30, 32) et la chemise externe (31, 33),
dans lequel, comme fluide thermique approvisionné vers les chemises (30, 32; 31, 33), sont employés deux systèmes (50, 51, 52, 53, 56; 60, 61, 62, 63, 66) de fluides thermiques présentant des températures différentes déterminées antérieurement et les deux systèmes des fluides thermiques sont permutés à un chronométrage prédéterminé durant la vulcanisation dans au moins une des chemises, et
les fluides thermiques approvisionnés vers la chemise interne (30, 32) et la chemise externe (31, 33) juste après le début de la vulcanisation sont un fluide thermique d'un côté de température élevée parmi les fluides thermiques des deux systèmes (50, 51, 52, 53, 56; 60, 61, 62, 63, 66) et un chronométrage de permutation du fluide thermique est fixé de manière à changer vers un côte de température basse du fluide thermique approvisionné vers une chemise dans au moins un site de pneu de la portion de bourrelet (BD) et de la portion d'épaule (SH) avant que la température dans ce site dépasse la température maximum autorisée de manière à satisfaire les conditions d'un domaine de degrés de vulcanisation déterminé antérieurement pour chacun de tous les sites de pneu incluant au moins la portion de bourrelet (BD) et la portion d'épaule (SH).

2. Procédé pour la vulcanisation d'un pneu selon la revendication 1, dans lequel le fluide thermique choisi parmi les deux systèmes est approvisionné vers une chemise de bande de roulement (34, 35) disposée dans un élément de chauffage annulaire (9, 14) qui est amené en contact avec des faces radialement externes de plusieurs segments de bande de roulement (4) divisés en circonférence dans le moule de vulcanisation (1) et formant une face de bande de roulement de pneu.

3. Procédé pour la vulcanisation d'un pneu selon la revendication 1 ou 2, dans lequel le nombre de permutations de l'approvisionnement du fluide thermique durant la vulcanisation est de un et la permutation est réalisée en changeant les fluides thermiques des deux systèmes (50, 51, 52, 53, 56; 60, 61, 62, 63, 66) d'un côté de température élevée à un côté de température basse.

4. Procédé pour la vulcanisation d'un pneu selon l'une quelconque des revendications 1 à 3, dans lequel les températures des fluides thermiques des deux systèmes (50, 51, 52, 53, 56; 60, 61, 62, 63, 66) sont supérieures à 100°C du côté de température élevée et se situe entre 20 et 100°C du côté de température basse.

5. Procédé pour la vulcanisation d'un pneu selon la revendication 4, dans lequel le fluide thermique du côté de température élevée est une vapeur et le fluide thermique du côté de température basse est de l'eau.

6. Procédé pour la vulcanisation d'un pneu selon l'une quelconque des revendications 1 à 3, dans lequel le côté de température élevée et le côté de température basse dans les fluides thermiques des deux systèmes sont une vapeur.

7. Procédé pour le réglage d'un procédé de vulcanisation de pneu selon l'une quelconque des revendications 1 à 6, dans lequel les fluides thermiques approvisionnés vers la chemise interne (30, 32), la chemise externe (31, 33) et la chemise de bande de roulement (34, 35) juste après le début de la vulcanisation sont un fluide thermique d'un côté de température élevée parmi les fluides thermiques des deux systèmes (50, 51, 52, 53, 56; 60, 61, 62, 63, 66) et un chronométrage de permutation du fluide thermique est fixé de manière à changer vers un côté de température basse du fluide thermique approvisionné vers une chemise dans au moins un site de pneu de la portion de bourrelet (BD), de la portion d'épaule (SH) et de la portion de bande de roulement (TR) avant que la température dans ce site dépasse la température maximum autorisée.

8. Procédé pour le réglage d'un procédé de vulcanisation de pneu selon l'une quelconque des revendications 1 à 7, dans lequel seulement un type du fluide thermique est approvisionné vers au moins une de la chemise interne (30, 32), de la chemise externe (31, 33) et de la chemise de bande de roulement (34, 35) et la vulcanisation est terminée au moment où le degré de vulcanisation du site de pneu correspondant à une telle chemise a atteint un degré de vulcanisation déterminé antérieurement.
